# EUROPEAN PATENT APPLICATION

(11) **EP 1 947 637 A2**
(43) Date of publication of application: **23.07.2008**
(21) Application number: 08100164.6
(22) Date of filing: 07.01.2008
(51) Int. Cl.: G09G 5/04, G09G 5/10

(54) **Display apparatus and video adjusting method thereof**

(30) Priority: 16.01.2007 KR 20070004905
(71) Applicant: Samsung Electronics Co., Ltd, Suwon-si, Gyeonggi-do 443-742 (KR)
(72) Inventor: Lee, Su-jin, Gyeonggi-do (KR); Kim, Kyoung-wook, Gyeonggi-do (KR)
(74) Representative: Grootscholten, Johannes A.M.

(57) **Abstract**

A display apparatus (1) includes: a receiving unit (40) which receives a video signal; a video processing unit (20) which performs video processing on the video signal and generates a processed video signal; a display unit (30) which displays a video based on the processed video signal; an image taking unit (10) which takes an image of a subject to generate an image information; and a control unit (50) which controls the video processing unit to change at least one property of the video being displayed in the display unit depending on the image information.

## Description

### BACKGROUND

### 1. Field of Invention

Apparatuses and methods consistent with the present invention relate to changing property of a video signal.

### 2. Description of the Related Art

In general, a display apparatus receives a video signal, and displays video based on the received video signal. In addition to displaying video, the display apparatus has been provided with various functions. Especially, a camera integrated type display apparatus is provided with a communication function such as a voice over internet protocol (VOIP) to transmit and receive video and audio signals to/from an external display apparatus through an image taking unit such as a camera, etc.

However, in the related art camera integrated type display apparatus, an image information generated by the image taking unit is merely displayed on the display apparatus, or transmitted to the outside. The related art camera integrated type display apparatus is incapable of changing property of the video depending on the image information generated according to an external environment.

### SUMMARY

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a display apparatus and a video adjusting method thereof for automatically changing property of a video signal depending on an image information generated from an image taking unit.

According to an aspect of the present invention there is provided a display apparatus, comprising: a receiving unit which receives a video signal; a video processing unit which performs a video processing with respect to the video signal; a display unit which displays video depending on the processed video signal; an image taking unit which takes an image of a subject to generate an image information; and a control unit which controls the video processing unit to change property of the video being displayed in the display unit depending on the image information.

The property of the video may comprise at least one of a brightness and a color temperature of the video.

The image taking unit may comprise a charge coupled device (CCD) which changes an optical image of the subject into an analog video signal, a corrected double sampling/automatic gain control (CDS/AGC) unit which processes the analog video signal, an analog to digital (A/D) converter which converts the analog video signal into a digital video signal, and a digital signal processor (DSP) which processes the digital video signal to generate the image information which corresponds to the subject.

The control unit may generate a background image information which corresponds to a background separated from the taken image of the subject, and changes the property of the video depending on the generated background image information.

The control unit may change the property of the video depending on a brightness information included in the background image information.

The control unit may extract the brightness information at a interval of time.

The control unit may calculate an average brightness of each frame from the image information, and changes the property of the video depending on the calculated average brightness.

The display apparatus may further comprise a communicating unit, wherein the control unit controls the communicating unit to transmit the image information which corresponds to the image of the subject which is taken by the image taking unit to an external apparatus.

According to another aspect of the present invention there is provided a video adjusting method of a display apparatus which comprises an image taking unit which takes an image of a subject to generate an image information, the method comprising: generating the image information through the image taking unit; and changing property of a video being displayed in the display apparatus depending on the generated image information.

The property of the video may comprise at least one of a brightness and a color temperature of the video.

The generating the image information may comprise generating a background image information which corresponds to a background separated from the taken image of the subject, and the changing the video property may comprise changing the property of the video depending on the generated background image information.

The changing the video property may comprise changing the property of the video depending on a brightness information included in the background image information.

The generating the image information may comprise calculating an average brightness of each frame from the image information, and the changing the video property comprises changing the property of the video depending on the calculated average brightness.

The changing the property of the video may comprise extracting the brightness information from the background image information at a interval of time.

The generating the image information may comprise transmitting the generated image information to an external host apparatus.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a block diagram illustrating a configuration of a display apparatus according to a first exemplary embodiment of the present invention;
FIG. 2 is a block diagram illustrating a configuration of a display apparatus according to a second exemplary embodiment of the present invention; and
FIG. 3 is a flowchart illustrating a video adjusting method of a display apparatus according to an exemplary embodiment of the present invention.

### DETAILED DESCRIPTION OF EXEMPLARY EMBODIMENTS

Hereinafter, exemplary embodiments of the present invention will be described in detail with reference to accompanying drawings, wherein like reference numerals refer to like elements throughout.

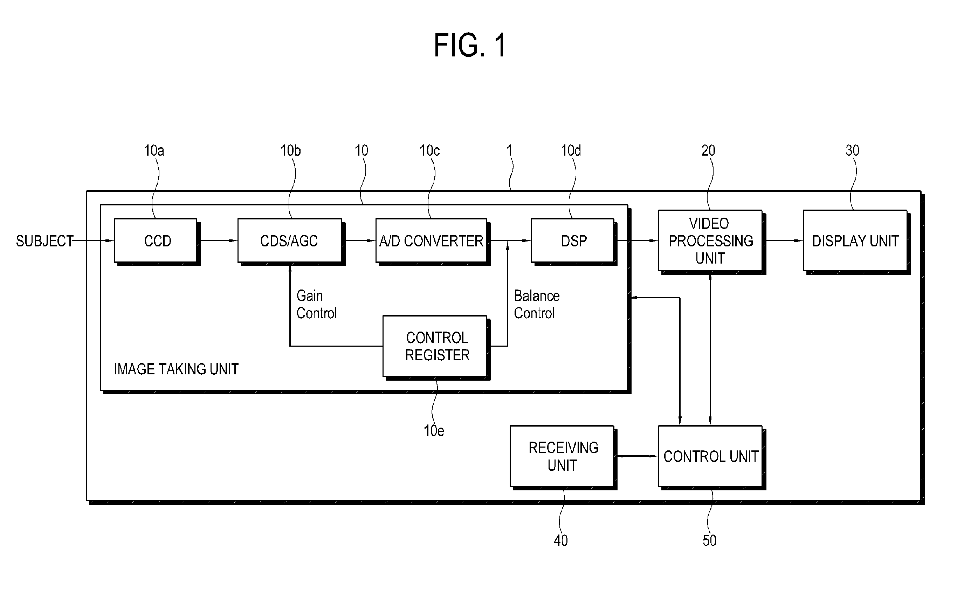

As shown in FIG. 1, a display apparatus 1 according to a first exemplary embodiment of the present invention includes an image taking unit 10, a video processing unit 20, a display unit 30, a receiving unit 40 and a control unit 50, and may be embodied by a monitor including a camera, etc.

The image taking unit 10 takes an image of a subject to generate an image information. The image taking unit 10 according to the present invention includes a charge coupled device (CCD) 10a as an image sensor, a corrected double sampling/automatic gain control (CDS/AGC) unit 10b, an analog to digital (A/D) converter 10c, a digital signal processor (DSP) 10d and a control register 10e.

The CCD 10a includes photoelectric transformation elements two-dimensionally arranged to photoelectrically transform light emitted from a subject. Here, each photoelectric transformation element transforms an optical image of the subject into an analog signal including three color values of RGB and a brightness information. The CCD 10a may transform the optical image of the subject into an analog signal according to YUV or YCbCr besides the RGB signal. Also, the image sensor may be embodied by a complementary metal oxide semiconductor (CMOS) device.

The CDS/AGC unit 10b performs a corrected double sampling with respect to a signal output from each pixel to remove an analog signal noise, and automatically increases a video signal gain so that an input video signal can be output with a predetermined level. Here, value of the video signal gain may be stored in the control register 10e.

The A/D converter 10c converts an analog video signal received from the CDS/AGC unit 10b into a digital video signal. Then, the DSP 10d processes the digital video signal converted by the A/D converter 10c to generate an image information with respect to an optical image of the subject input by the CCD 10a.

The digital video signal output from the A/D converter 10c may be transmitted to the DSP 10d after a white balance of the digital video signal is adjusted by a white balance value stored in the control register 10e.

The image taking unit 10 is detachably mounted to the display apparatus 1, and the image information may be transmitted to the display apparatus 1 by means of a Universal Serial Bus (USB) or an IEEE 1394 interface.

The video processing unit 20 performs a video processing with respect to a video signal received from a receiving unit 40. The video processing unit 20 according to the present invention may perform decoding for extracting a video information from an input video signal, scaling for adjusting resolution of a decoded video according to property of the display unit 30 and setting of a user, enhancing quality of video for picture enhancement, etc.

Also, the video processing unit 20 performs a video processing with respect to the image information generated by the image taking unit 10. For example, video processing such as a contour correction, a brightness/chrominance signal conversion, etc. may be performed with respect to the image information generated by the image taking unit 10.

The display unit 30 displays video based on a video signal processed by the video processing unit 20. The display unit 30 may be embodied by a cathode ray tube (CRT), a liquid crystal display (LCD), a plasma display panel (PDP), a digital light processing (DLP) device, a surface conduction electron emitter display (SED), a field emission display (FED), etc.

The receiving unit 40 receives a video signal from the outside. The receiving unit 40 according to the present invention may be embodied by an antenna and a tuner.

The control unit 50 controls the video processing unit 20 to change property of video depending on a brightness information included in an image information generated by the image taking unit 10 to be displayed the video to the display unit 30. The control unit 50 according to the present invention may be embodied by a microcomputer, and may receive information about an image taken from the image taking unit 10 through a general purpose input output (GPIP) port.

Hereinafter, exemplary embodiments of a process that the control unit 50 adjusts the brightness of video displayed in the display unit 30 by means of an image information generated by the image taking unit 10 will be described.

At first, the control unit 50 controls the video processing unit 20 to extract a brightness information from an analog signal converted by the CCD 10a, to compare it with brightness predetermined in the display apparatus 1 or the brightness of video being displayed in the display unit 30, and to adjust the brightness of the video displayed to the display unit 30. Here, the brightness information extracted by the control unit 50 includes a brightness information which the image taking unit 10 stores to perform an exposure correction, or an average brightness of all pixels contained in a single frame of a picked-up image.

The control unit 50 compares the brightness of a subject corresponding to a brightness information included in an image information generated by the image taking unit 10 with brightness predetermined in the display apparatus 1, or an average brightness of video displayed in the display unit 30. Then, if the brightness of the subject corresponding to the brightness information included in the image information is darker than the predetermined brightness of the display apparatus 1 or the average brightness of the video displayed in the display unit 30, the control unit 50 decreases the brightness of the video displayed in the display unit 30. On the other hand, if the brightness of the subject is brighter than the set brightness of the display apparatus 1 or the average brightness of the video displayed in the display unit 30, the control unit 50 increases the brightness of the video displayed in the display unit 30.

Also, the control unit 50 may change other properties such as a color temperature, etc., in addition to the brightness of the video being displayed in the display unit 30. In case of changing the color temperature of video, the control unit 50 may calculate a color coordinate value from an image information taken by the image taking unit 10, and adjust the level of current supplied to the display unit 30 depending on the calculated color coordinate value, thereby changing the color temperature of the video.

As another exemplary embodiment of a video brightness adjusting process of the control unit 50, the control unit 50 may change property of video by receiving an image for each frame from a storing unit (not shown) storing an image information generated by the image taking unit 10, and determining a brightness information thereof. Here, the control unit 50 may store the image information according to a interval of time.

Here, the control unit 50 may generate a background image information corresponding to a background separated from an image of a subject taken by the image taking unit 10 by using a motion picture compressing algorithm such as from Moving Picture Experts Group (MPEG), etc., and change property of a video signal depending on the generated background image information. That is, an area having a color difference or a brightness value difference between adjacent pixels of each frame smaller than a predetermined value may be recognized as a background, and property of video being displayed in the display unit 30 may be changed depending on an image information of the area recognized as the background. Accordingly, the brightness of an external background may be exactly extracted irrespective of brightness perceived by a user, etc.

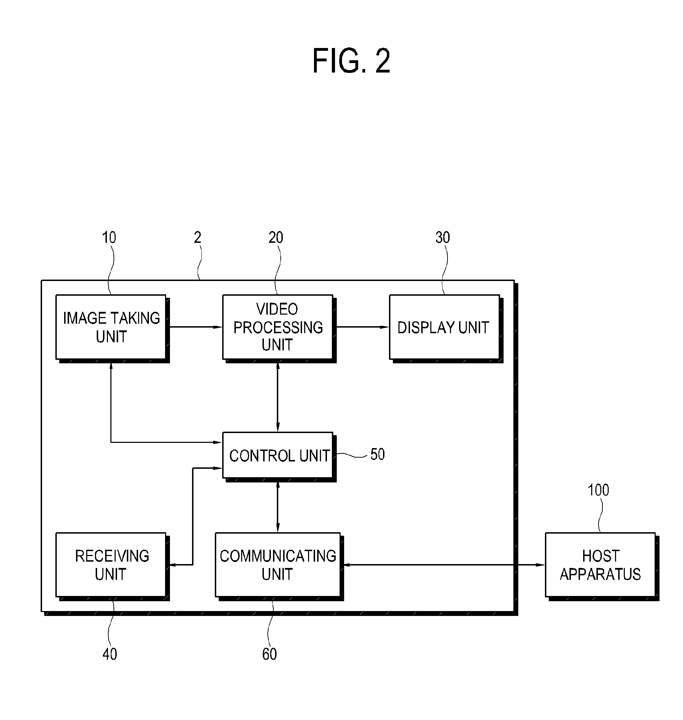

Hereinafter, a display apparatus 2 according to a second exemplary embodiment of the present invention will be described by referring to FIG. 2. As shown in FIG. 2, a display apparatus 2 according to a second exemplary embodiment of the present invention further includes a communicating unit 60.

The communicating unit 60 transmits an image information corresponding to an image of a subject taken by an image taking unit 10 to an external host apparatus 100 to be transmitted to the outside. Here, the external host apparatus 100 may be embodied by a computer system. If the image information generated by an image taking unit 10 is transmitted to the external host apparatus 100, the control unit 50 controls the video processing unit 20 to perform video processing for changing a property of the video being displayed in the display apparatus 2 to be transmitted to the external host apparatus 100. The communicating unit 60 according to the present invention may include various configurations being capable of connecting a plurality of electronic devices by means of a wire or wireless communicating type.

Also, the control unit 50 may receive an audio information from the outside, generate an audio signal of a predetermined format by means of an audio processing unit (not shown), and transmit the generated audio signal to an external host apparatus, an external display apparatus or the like through the communicating unit 60. With this configuration, the display apparatus 2 can perform a video communication with a user at a remote side by transmitting the image information and the audio information to the external host apparatus, the external display apparatus or the like.

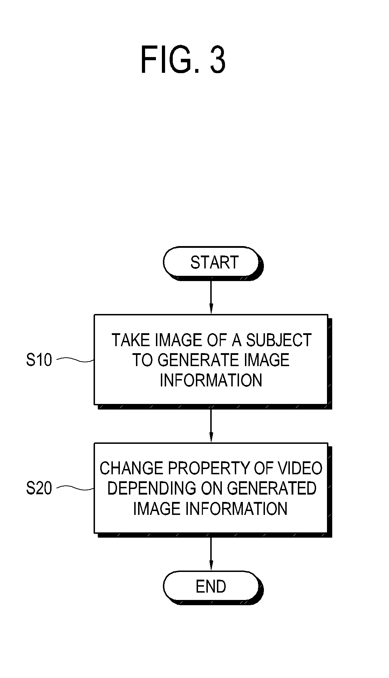

Hereinafter, a video adjusting method of a display apparatus according to an exemplary embodiment of the present invention will be described by referring to FIG. 3.

As shown in FIG. 3, at first, a control unit 50 generates an image information by means of an image taking unit 10 (S10). Here, the control unit 50 may transmit the image information generated in operation S10 to an external host apparatus 100. Then, the control unit 50 changes property of video depending on the image information generated in operation S10 (S20). Here, the changed property of video may include at least one of a brightness of video and a color temperature of video.

In operation S10, the control unit 50 may generate a background image information corresponding to a background separated from an image of a subject taken by the image taking unit 10. In operation S20, the control unit 50 may change property of video depending on the image information generated in operation S10. Accordingly, the brightness of a background can be exactly extracted irrespective of brightness perceived by a user, etc.

Also, in operation S10, the control unit 50 may calculate an average brightness of each frame from the image information generated by the image taking unit 10. In operation S20, the control unit 50 may change property of video depending on the average brightness calculated in operation S10.

The control unit 50 displays video having the property changed in operation S20. Accordingly, the property of the video displayed in the display unit 30 can be automatically changed depending on the image information generated by the image taking unit 10.

As described above, the present invention provides a display apparatus and a video adjusting method thereof for changing property of video displayed in a display unit depending on an image information generated by imaging a subject. Accordingly, the property of a video signal is automatically adjusted depending on an external environmental change of the display apparatus.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus, comprising:
a receiving unit which receives a video signal;
a video processing unit which performs video processing on the received video signal and generates a processed video signal;
a display unit which displays a video based on the processed video signal;
an image taking unit which takes an image of a subject and generates an image information; and
a control unit which controls the video processing unit to change at least one property of the video being displayed in the display unit based on the image information.

2. The display apparatus according to claim 1, wherein the at least one property of the video comprises at least one of a brightness of the video and a color temperature of the video.

3. The display apparatus according to claim 1, wherein the image taking unit comprises:
a charge coupled device (CCD) which changes an optical image of the subject into an analog video signal;
a corrected double sampling/automatic gain control (CDS/AGC) unit which processes the analog video signal;
an analog to digital converter which converts the analog video signal into a digital video signal; and
a digital signal processor which processes the digital video signal and generates the image information which corresponds to the image of the subject.

4. The display apparatus according to claim 1, wherein the control unit generates a background image information which corresponds to a background separated from the image of the subject, and changes the at least one property of the video based on the background image information which is generated.

5. The display apparatus according to claim 4, wherein the control unit changes the at least one property of the video based on a brightness information included in the background image information.

6. The display apparatus according to claim 5, wherein the control unit extracts the brightness information at a predetermined interval of time.

7. The display apparatus according to claim 1, wherein the control unit calculates an average brightness of each frame from the image information, and changes the at least one property of the video based on the average brightness which is calculated.

8. The display apparatus according to claim 1, further comprising a communicating unit,
wherein the control unit controls the communicating unit to transmit the image information which corresponds to the image of the subject which is taken by the image taking unit to an external apparatus.

9. A video adjusting method of a display apparatus which comprises an image taking unit which takes an image of a subject to generate an image information, the method comprising:
generating the image information through the image taking unit; and
changing at least one property of a video being displayed in the display apparatus based on the image information which is generated.

10. The video adjusting method of the display apparatus according to claim 9, wherein the at least one property of the video comprises at least one of a brightness of the video and a color temperature of the video.

11. The video adjusting method of the display apparatus according to claim 9, wherein the generating the image information comprises generating a background image information which corresponds to a background separated from the image of the subject, and
the changing the at least one video property of the video comprises changing the property of the video based on the background image information which is generated.

12. The video adjusting method of the display apparatus according to claim 11, wherein the changing the at least one property of the video comprises changing the at least one property of the video based on a brightness information included in the background image information.

13. The video adjusting method of the display apparatus according to claim 12, wherein the generating the image information comprises calculating an average brightness of each frame from the image information, and
the changing the at least one property of the video comprises changing the at least one property of the video based on the average brightness which is calculated.

14. The video adjusting method of the display apparatus according to claim 12, wherein the changing the at least one property of the video comprises extracting the brightness information from the background image information at an interval of time.

15. The video adjusting method of the display apparatus according to claim 9, wherein the generating the image information comprises transmitting the image information to an external apparatus.
